# EUROPÄISCHE PATENTSCHRIFT

(11) **EP 3 697 650 B1**
(45) Veröffentlichungstag und Bekanntmachung des Hinweises auf die Patenterteilung: **04.08.2021**
(21) Anmeldenummer: 18793620.8
(22) Anmeldetag: 18.10.2018
(51) Int. Cl.: B60R 22/18, B60R 22/24

(54) **UMLENKVORRICHTUNG FÜR EINEN SICHERHEITSGURT**
GUIDING DEVICE FOR A SAFETY BELT
DISPOSITIF DE GUIDAGE POUR CEINTURE DE SÉCURITÉ

(30) Priorität: 18.10.2017 DE 102017218625
(43) Veröffentlichungstag der Anmeldung: 26.08.2020
(73) Patentinhaber: Bayerische Motoren Werke Aktiengesellschaft, 80809 München (DE)
(72) Erfinder: LÖCHERER, Andreas, 86807 Buchloe (DE)
(86) Internationale Anmeldenummer: PCT/EP2018/078601
(87) Internationale Veröffentlichungsnummer: WO 2019/077060

(56) Entgegenhaltungen:
- JP-A- S59 177 448
- JP-A- 2006 297 984
- JP-A- 2012 240 432
- US-A- 5 308 148
- US-A1- 2004 084 952
- US-A1- 2008 030 013

## Beschreibung

### TECHNISCHES GEBIET

Die Erfindung betrifft eine Umlenkvorrichtung für einen Sicherheitsgurt. Sie betrifft weiterhin ein Kraftfahrzeug mit zumindest einer Sicherheitsgurtanordnung, die eine Umlenkvorrichtung für einen Sicherheitsgurt aufweist.

### HINTERGRUND DER ERFINDUNG

Sicherheitsgurte sind ein wesentlicher Bestandteil eines Rückhaltekonzepts für Passagiere von Kraftfahrzeugen, dessen Schutzwirkung neben den üblicherweise als Dreipunkt-Automatikgurte ausgebildeten Sicherheitsgurten im Wesentlichen durch Airbags und Deformationselemente im Fahrzeuginnenraum erzielt wird. Die Dreipunkt-Automatikgurte sind mit einer Wickelrollenanordnung für das Gurtband ausgestattet, die im Normalbetrieb das Auf- und Abwickeln des Gurtbandes ermöglicht und die im Fall einer unüblichen Beschleunigung das Abwickeln des Gurtbandes blockiert. Die Wickelrollenanordnung kann von einer Gurtstraffereinrichtung unterstützt sein, die das Gurtband um einen bestimmten Weg zurückzieht, um eine auf einem zugeordneten Fahrzeugsitz sitzende und mit dem Sicherheitsgurt gesicherte Person im Falle eines Unfalls fest an den Fahrzeugsitz zu fixieren. Zudem kann die Wickelrollenanordnung mit einem Gurtkraftbegrenzer versehen sein, um ein definiertes Abwickeln des Gurtbands im Falle einer Kollision zu ermöglichen, um dadurch die auf eine mit dem Sicherheitsgurt gesicherte Person einwirkende Gurtkraft zu begrenzen.

Die Wickelrollenanordnung ist üblicherweise im unteren oder seitlichen Bereich der Fahrzeugstruktur vorgesehen und mit dieser verbunden oder im unteren Bereich des Fahrzeugsitzes angeordnet. Ausgehend von der Wickelrollenanordnung ist das Gurtband nach oben in Richtung zum oberen Ende der Sitzlehne des zugeordneten Fahrzeugsitzes geführt und ist dort mittels einer oberen Umlenkvorrichtung zur Schulter der auf dem Fahrzeugsitz sitzenden Person geleitet. Von dort ist das Gurtband als Schultergurtabschnitt über den Thorax der Person zu einer Umlenkung an einer Gurtschließe geführt, die mit einem an der Fahrzeugstruktur oder am Fahrzeugsitz angebrachten Gurtschloss zusammenwirkt. Von der Umlenkung an der Gurtschließe verläuft das Gurtband über das Becken der Person als Beckengurtabschnitt zu einer an der Fahrzeugstruktur oder am Fahrzeugsitz angebrachten Gurtendbefestigung.

Die obere Umlenkvorrichtung dient dazu, einen optimalen Verlauf des Gurtbandes über die Schulter der Person und damit einen optimalen Verlauf des Schultergurtabschnitts über den Oberkörper eines Großteils der potentiellen Fahrzeugpassagiere ("Perzentile") unabhängig von deren Körpergröße zu ermöglichen. Ohne eine solche obere Umlenkung des Gurtbandes kann kein idealer Gurtbandverlauf für alle Perzentile gewährleistet werden.

Für die vorderen Einzelsitze eines Fahrzeugs werden vorwiegend Umlenkvorrichtungen eingesetzt, die jeweils aus einem gebogenen Draht bestehen, dessen Enden miteinander verschweißt sind ("Drahtbiegegeometrie"), wobei die Umlenkvorrichtung an der seitlichen Fahrzeugstruktur, zum Beispiel an der A-, B- oder C-Säule des Fahrzeugs, oder an der Sitzlehne zumeist höhenverstellbar, schwenkbar gelagert ist. Für die hinteren äußeren Sitzplätze eines Fahrzeugs sind die oberen Umlenkvorrichtungen häufig als Kunststoffformteil im oberen Bereich der Sitzlehne oder in einer Innenraum-Seitenverkleidung ausgebildet.

Bei Umlenkvorrichtungen aus Kunststoff, bei denen eine großflächige Berührung zwischen dem Gurtband und der Oberfläche der Umlenkvorrichtung erfolgt, besteht das Risiko, dass das Gurtband bei zu schneller Relativbewegung zur Umlenkvorrichtung mit der Umlenkvorrichtung verschmilzt. Umlenkvorrichtungen aus Drahtbiegegeometrien sind hingegen teuer und deren Anbindung an die Sitz- oder Fahrzeugstruktur, deren Festigkeit sowie deren Auslegung zu Schnittstellen wie zum Beispiel zur Innenraumverkleidung ist jeweils schwierig zu realisieren.

### STAND DER TECHNIK

Die DE 10 2014 104 435 A1 zeigt und beschreibt eine Umlenkvorrichtung für einen Sicherheitsgurt in einem Kraftfahrzeug, die neben der Lehne einer rückwärtigen Sitzbank an der Kraftfahrzeugstruktur angebracht ist. Diese vorbekannte Umlenkvorrichtung ist von einer räumlichen Drahtbiegekonstruktion gebildet, die den Gurt entweder in eine nach vorne gerichtete Nichtgebrauchsstellung oder in eine zur Lehne hin gerichtete Gebrauchsstellung umlenkt.

Weitere Umlenkvorrichtungen für einen Sicherheitsgurt in einem Kraftfahrzeug sind beispielsweise aus der US 5 368 148 A, der JP S59 177448 A und der US 2008/030013 A1 bekannt.

### DARSTELLUNG DER ERFINDUNG

Aufgabe der vorliegenden Erfindung ist es, eine gattungsgemäße Umlenkvorrichtung für einen Sicherheitsgurt so auszubilden, dass sie kostengünstig in der Herstellung ist und problemlos auch im Bereich der äußeren Sitze einer hinteren Sitzbank oder von hinteren Einzelsitzen eingesetzt werden kann.

Diese Aufgabe wird gelöst mit den Merkmalen des Patentanspruchs 1.

Die erfindungsgemäße Umlenkvorrichtung für einen Sicherheitsgurt in einem Kraftfahrzeug mit einem Gurtumlenkelement, das ausgebildet ist, um einen aus einer ersten Richtung herangeführten Sicherheitsgurt in eine zweite Richtung umzulenken, zeichnet sich dadurch aus, dass das Gurtumlenkelement an einem Formteil ausgebildet ist und dass am Formteil zumindest ein Gurtanlaufelement vorgesehen ist, das den an das Formteil herangeführten Sicherheitsgurt zum Gurtumlenkelement hin lenkt.

Dabei ist das Gurtanlaufelement mindestens so breit wie der Sicherheitsgurt, um das Gurtband in seiner gesamten Breite in die Umlenkvorrichtung einführen zu können, ohne dass die Kanten des Gurtbandes an der Umlenkvorrichtung anlaufen. Andererseits ist die Breite des Gurtanlaufelements erfindungsgemäß nur geringfügig größer als die Breite des Gurtbandes. Die Breite des Gurtanlaufelements beträgt bevorzugt maximal das 1,5-fache der Breite des Gurtbands.

Bevorzugt beträgt die Breite des Gurtanlaufelements mindestens das 1,1-fache der Breite des Gurtbands.

Weiter bevorzugt beträgt die Breite des Gurtanlaufelements mindestens das 1,2-fache der Breite des Gurtbands.

Weiter bevorzugt beträgt die Breite des Gurtanlaufelements maximal das 1,4-fache der Breite des Gurtbands.

Weiter bevorzugt beträgt die Breite des Gurtanlaufelements maximal das 1,3-fache der Breite des Gurtbands.

Die Breite des Gurtumlenkelements ist deutlich größer als die Breite des Gurtanlaufelements bemessen. Die Breite des Gurtumlenkelements beträgt erfindungsgemäß mindestens das 2-fache der Breite des Gurtbands. Bevorzugt ist die Breite des Gurtumlenkelements nicht größer als das 5-fache der Breite des Gurtbands.

Bevorzugt beträgt die Breite des Gurtumlenkelements mindestens das 2,5-fache der Breite des Gurtbands.

Weiter bevorzugt beträgt die Breite des Gurtumlenkelements mindestens das 3-fache der Breite des Gurtbands.

Weiter bevorzugt beträgt die Breite des Gurtumlenkelements maximal das 4,5-fache der Breite des Gurtbands.

Weiter bevorzugt beträgt die Breite des Gurtumlenkelements maximal das 4-fache der Breite des Gurtbands.

Der Begriff "Breite des Gurtumlenkelements" ist nicht im streng geometrischen Sinn als eine reine Breitenerstreckung zu verstehen, sondern als die Strecke, entlang derer sich das Gurtband am Gurtumlenkelement verschieben kann.

Das Formteil ist aus einem Metallblech gebildet, wobei das Formteil ein Tiefziehteil ist.

Das Gurtumlenkelement ist an einem oberen Rand des Formteils, das Gurtanlaufelement an einem unteren Rand des Formteils ausgebildet.

### VORTEILE

Die als Formteil ausgebildete Umlenkvorrichtung verfügt über eine doppelte Anlaufgeometrie für das Gurtband mit einem unteren Gurtanlaufelement und einem oberen Gurtumlenkelement. Das untere Gurtanlaufelement sorgt für eine Vororientierung des von der Wickelrollenanordnung zugeführten Gurtbands, die bewirkt, dass das Gurtband geordnet und glatt zum Gurtumlenkelement, um dieses teilweise herum und von dort zum Schulterbereich des Passagiers läuft. Das Gurtanlaufelement und / oder das Gurtumlenkelement können dabei vorzugsweise mit einer reibungsmindernden Oberflächenbeschichtung versehen sein, wodurch die Umlenkvorrichtung besonders gurtstraffertauglich wird.

Durch die begrenzte Breite des Gurtanlaufelements wird eine präzise Führung des Gurtbandes am "Eingang" der Umlenkvorrichtung erreicht. Dadurch wird verhindert, dass die Kanten des Gurtbands an der Austrittsführung der Wickelrollenanordnung anlaufen. Außerdem wird durch die Erfindung erreicht, dass die Zugrichtung des Gurtbands möglichst parallel zur Ausrichtung der Wickelrollenanordnung bleibt.

Durch die im Vergleich zur Breite des Gurtanlaufelements deutlich größere Breite des Gurtumlenkelements wird erreicht, dass das aus der Umlenkvorrichtung austretende Gurtband sich hinsichtlich des Austrittswinkels an die Größe und/oder an Statur und/oder an die Körperhaltung des Insassen anpassen kann, indem sich das Gurtband entlang der Breitenerstreckung des Gurtumlenkelements verschieben kann. Damit werden die für die Auslegung eines Kraftfahrzeugs maßgeblichen Perzentile von Insassen (von der so genannten "5%-Frau" bis zum so genannten "95%-Mann") hinsichtlich der Gurtbandführung abgedeckt, da sich das aus der Gurtumlenkelement austretende Gurtband hinsichtlich seines Austrittswinkels aus der Umlenkvorrichtung an die Größe und an die Statur des Insassen anpassen kann. Der Insasse hat die Möglichkeit, den Gurtbandverlauf durch "Zurechtrücken" des Gurtbands selbst zu bestimmen, je nach persönlichem Empfinden und/oder individueller Körperhaltung. Somit wird beispielsweise einer unkomfortablen Anlage des Gurtbands im Halsbereich eines vergleichsweise kleinen Insassen entgegengewirkt und stattdessen das Gurtband in einen komfortablen, über das Schlüsselbein führenden Verlauf gebracht.

Andererseits wird durch die Verschieblichkeit des Gurtbands entlang der Breitenerstreckung des Gurtumlenkelements erreicht, dass das Gurtband im Crashfall die kürzeste Verbindung zwischen der Umlenkvorrichtung und dem Körper des Insassen einnehmen kann, wenn eine Gurtstraffereinrichtung das Gurtband in Richtung der Wickelrollenanordnung zieht und dabei das Gurtband entlang der Breite des Gurtumlenkelements entlang läuft.

Die Umlenkvorrichtung mit einem als Tiefziehteil ausgebildeten Formteil kann individuell an die konstruktive Umgebung im Fahrzeuginnenraum angepasst werden und vereinfacht somit die Auslegung zu konstruktiven Schnittstellen. Einzig die Herstellbarkeit und die Tiefziehfähigkeit des Materials begrenzen hier die Ausführbarkeit. Das Formteil kann mittels Simulation gewichts- und festigkeitsoptimiert ausgelegt werden. Das Verhalten in Zusammenwirkung mit dem pyrotechnischen Gurtstraffer ist vorhersagbar und robust. Durch die freie Gestaltungsmöglichkeit innerhalb der Grenzen der Herstellbarkeit ist eine hinsichtlich Gurtaufroll- und Gurtrückzugsverhalten optimierte geometrische Gestaltung möglich. Auch die Umsetzung eines idealen Gurtbandverlaufs für die verschiedenen Perzentile kann realisiert werden.

Weitere bevorzugte und vorteilhafte Ausgestaltungsmerkmale der erfindungsgemäßen Umlenkvorrichtung sind Gegenstand der Unteransprüche 2 bis 8.

Dabei ist es von besonderem Vorteil, wenn der obere Rand des Formteils gerollt ist.

Vorzugsweise ist der untere Rand des Formteils gerollt.

Besonders vorteilhaft ist es, wenn sich zwischen dem oberen gerollten Rand und dem unteren gerollten Rand eine mittlere Verbindungsstruktur, vorzugsweise eine Verbindungsfläche, des Formteils erstreckt und wenn zumindest ein Gurtführungsabschnitt des Gurtumlenkelements und zumindest ein Gurtführungsabschnitt des Gurtanlaufelements über die Verbindungsstruktur hervorstehen. Diese Ausgestaltung bewirkt, dass das Gurtband nur auf den gerollten Rändern und nicht auch auf der Verbindungsstruktur aufliegt, wodurch Reibungswiderstände zwischen der Umlenkvorrichtung und dem Formteil minimiert sind, insbesondere wenn die Berührungsflächen zwischen Gurtband und Formteil reibungsmindernd beschichtet sind.

Von besonderem Vorteil ist auch eine Ausführungsform der Erfindung, bei der das Gurtumlenkelement, insbesondere der obere gerollte Rand, um die vorgesehene Laufrichtung des Gurtbandes herum bogenförmig gekrümmt ist. Diese bogenförmige Krümmung gestattet es, den Gurtverlauf nicht nur aus seiner ersten Verlaufsebene zwischen der Wickelrollenanordnung und der Umlenkvorrichtung in eine zweite Verlaufsebene zwischen der Umlenkvorrichtung und der Schulter des Passagiers umzulenken, sondern auch noch um eine Hochachse zu verschwenken.

Die bogenförmige Krümmung kann entlang der Breitenerstreckung des Gurtumlenkelements einen gleichbleibenden oder einen unterschiedlichen Radius aufweisen. Bei der Variante mit unterschiedlichem Krümmungsradius kann der Austrittswinkel des Gurtbands aus der Umlenkvorrichtung in besonders individueller Weise an die Gegebenheiten des Kraftfahrzeugs und die abzudeckenden Perzentile von Insassen angepasst werden.

Neben der bogenförmigen Ausgestaltung des Gurtumlenkelements ist beispielsweise auch eine L-förmige Ausgestaltung möglich.

Die Umlenkvorrichtung kann sowohl karosseriefest (also am Rohbau des Kraftfahrzeugs) als auch sitzfest (also am Rücksitz des Kraftfahrzeugs) angeordnet sein.

Grundsätzlich kann vorgesehen sein, dass das Gurtumlenkelement über eine Mehrzahl unterschiedlicher Ausführung von Kraftfahrzeugen eines Herstellers identisch oder zumindest ähnlich gestaltet ist. Damit ergibt sich eine kostengünstige Herstellung.

Das Gurtanlaufelement der Umlenkvorrichtung kann optimal auf die Gurtbandzuführung ausgerichtet sein, je nach Positionierung von Wickelrollenanordnung und Umlenkvorrichtung. Dieser Zulauf des Gurtbands aus der Wickelrollenanordnung ist je nach Ausführung des Kraftfahrzeugs unterschiedlich, in Abhängigkeit von den Bauraumverhältnissen, so dass sich unterschiedliche Winkel für die Zuführung des Gurtbands ergeben.

In Ausgestaltung der Erfindung sind die Mittelachsen von Gurtanlaufelement und Gurtumlenkelement zueinander windschief. Unter "Mittelachse" ist in Zusammenhang mit der vorliegenden Erfindung zu Verbindung der beiden Endpunkte von Gurtanlaufelement bzw. Gurtumlenkelement zu verstehen, also beispielsweise bei einem bogenförmigen Gurtumlenkelement die Sehne zwischen den beiden Endpunkten des Gurtumlenkelements. Damit besteht die Möglichkeit, die Gurtumlenkung optimal im Hinblick auf einen komfortablen Verlauf des Gurtbands am Insassen auszurichten, unabhängig von der Platzierung der Wickelrollenanordnung an der Karosserie des Kraftfahrzeugs. Die windschiefe Anordnung der Mittelachsen ist in einfacher Weise bei einer Herstellung der Umlenkvorrichtung im Tiefziehverfahren möglich.

Grundsätzlich ermöglicht die Erfindung eine Umlenkung des Gurtbands in eine beliebige Richtung des Gurtbandaustritts, nahezu unabhängig von der Ursprungsrichtung des Gurtbands beim Einlauf in die Umlenkvorrichtung.

Die Umlenkvorrichtung besteht bevorzugt aus nur einem Bauteil, ohne bewegliche Teile. Dadurch ergibt sich eine einfach Herstellbarkeit bei geringen Kosten sowie eine große Belastbarkeit und Funktionssicherheit.

Durch die Führung des Gurtbands zwischen Gurtanlaufelement und Gurtumlenkelement, ohne dass das Gurtband dazwischen an einer anderen Fläche der Umlenkvorrichtung anliegt, ergibt sich ein Verlauf des Gurtbands ohne Falten und ohne Verwerfungen.

Die Erfindung ist gemäß Anspruch 8 auch gerichtet auf ein Kraftfahrzeug mit zumindest einer Sicherheitsgurtanordnung, die eine erfindungsgemäße Umlenkvorrichtung aufweist.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine perspektivische Rückansicht einer Fahrzeugsitzbank mit einer seitlichen Karosseriestruktur auf eine Sicherheitsgurtanordnung mit einer erfindungsgemäßen Umlenkvorrichtung;
- Fig. 2: eine perspektivische Ansicht einer erfindungsgemäßen Umlenkvorrichtung für einen Sicherheitsgurt;
- Fig. 3: einen Schnitt durch die Umlenkvorrichtung entlang der Linie III-III in Fig. 2;
- Fig. 4: eine alternative Ausführungsform der erfindungsgemäßen Umlenkvorrichtung,
- Fig. 5: eine Ansicht der zweiten Ausführungsform schräg von unten,
- Fig. 6 bis 8: perspektivische Ansichten auf eine dritte Ausführungsform einer erfindungsgemäßen Umlenkvorrichtung aus unterschiedlichen Blickwinkeln und
- Fig. 9 bis 12: perspektivische Ansichten auf eine vierte Ausführungsform einer erfindungsgemäßen Umlenkvorrichtung aus unterschiedlichen Blickwinkeln.

### DARSTELLUNG VON BEVORZUGTEN AUSFÜHRUNGSBEISPIELEN

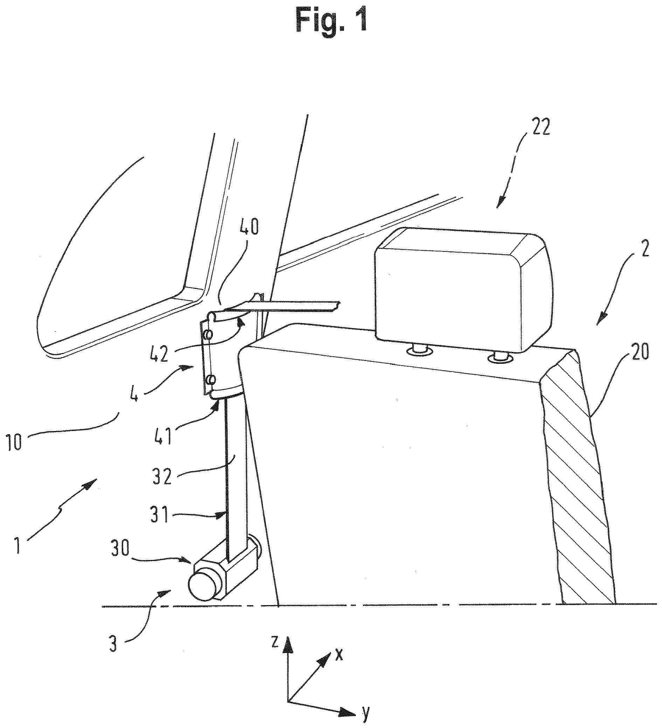

Fig. 1 zeigt eine Rückansicht eines Teils einer Sitzlehne 20 einer hinteren Sitzbank 2 in einem Kraftfahrzeug 1 mit einer seitlichen Fahrzeugstruktur 10. An der seitlichen Fahrzeugstruktur 10 ist eine Sicherheitsgurtanordnung 3 für den äußeren Sitz 22 der Sitzbank 2 als Teil eines Passagier-Rückhaltesystems vorgesehen. Die Sicherheitsgurtanordnung 3 weist eine Wickelrollenanordnung 30 für ein Gurtband 32 auf, die im unteren Bereich der Sitzlehne 20 mit der Fahrzeugstruktur 10 verbunden ist. Die Wickelrollenanordnung 30 ist in der dem Fachmann bekannten Weise ausgeführt, wie dies bei 3-Punkt-Automatikgurten üblich ist. Die Wickelrollenanordnung 30 ermöglicht im Normalbetrieb das Auf- und Abwickeln des Gurtbandes 32 und im Falle einer unüblichen Beschleunigung blockiert ein Sperrmechanismus der Wickelrollenanordnung 30 das Abwickeln des Gurtbandes 32. Zusätzlich kann die Wickelrollenanordnung 30 mit einer (in der Fig. 1 nicht dargestellten) Gurtstraffereinrichtung versehen sein, die das Gurtband 32 um einen bestimmten Weg zurück zieht, um eine auf dem zugeordneten Fahrzeugsitz sitzende und mit dem Sicherheitsgurt gesicherte Person im Falle eines Unfalls fest an den Fahrzeugsitz zu fixieren. Die Wickelrollenanordnung 30 kann auch mit einem Gurtkraftbegrenzer versehen sein, der ein definiertes Abwickeln des Gurtbandes 32 im Falle einer Kollision ermöglicht, um dadurch die auf eine mit dem Sicherheitsgurt gesicherte Person einwirkende Gurtkraft zu begrenzen.

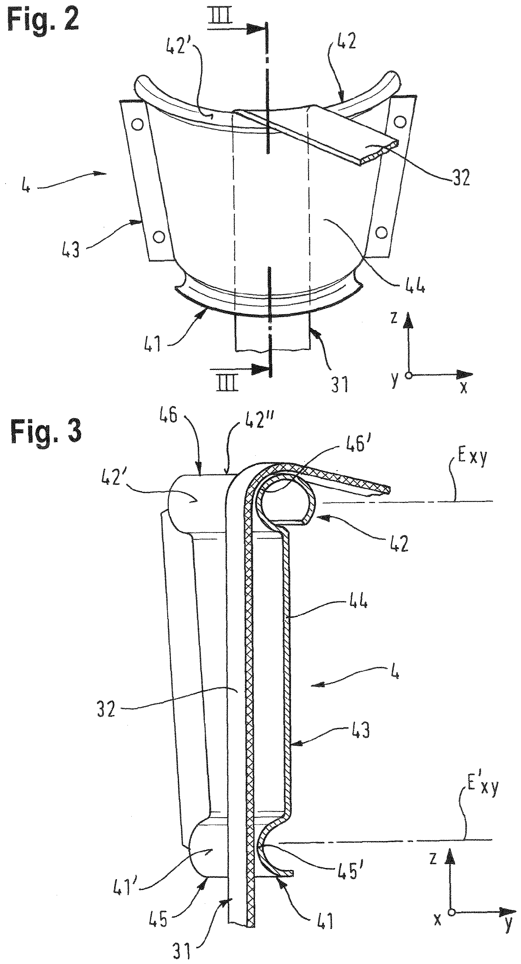

Das Gurtband 32 verläuft von der Wickelrollenanordnung 30 frei im Innenraum des Kraftfahrzeugs 1 oder hinter einer (nicht gezeigten) Verkleidung der seitlichen Fahrzeugstruktur 10 nach oben zum oberen Ende der Sitzlehne 20. Im Bereich des oberen Endes der Sitzlehne 20 ist an der Fahrzeugstruktur 10 eine Umlenkvorrichtung 4 angebracht, die gemeinsam mit der Fahrzeugstruktur 10 eine sich im Wesentlichen vertikal erstreckende Durchtrittsöffnung 40 für das Gurtband 32 bestimmt. Die Umlenkvorrichtung 4 ist in Form einer konusförmigen Halbschale gekrümmt, wobei der Krümmungsradius am ersten, unteren Rand 41 kleiner sein kann als der Radius am zweiten, oberen Rand 42 der Umlenkvorrichtung 4. Das Gurtband 32 ist über den oberen Rand 42 in Richtung auf die Lehne 20 und die Schulter einer darauf sitzenden Person umgelenkt. Der Aufbau und die Gestaltung der Umlenkvorrichtung 4 werden nachstehend anhand der Fig. 2 und 3 näher erläutert.

Die Umlenkvorrichtung ist, wie in Fig. 2 zu erkennen ist, als Formteil 43 aus einem Blech, beispielsweise aus Stahlblech gebildet, wobei dieses Formteil 43 vorzugsweise ein Tiefziehteil ist. Dieses Formteil 43 weist eine mittlere Verbindungsstruktur 44 auf, die beispielsweise als um die dedizierte Laufrichtung des Gurtbandes 32 gewölbtes Blech ausgebildet ist (Fig. 3). Der obere Rand 42 des Formteils 43 ist als gerollter Rand ausgebildet, wozu das Blech des Formteil 43 zunächst zur Innenseite der Krümmung des Formteils 43 hin abgebogen ist und von dort mit einem nahezu kreisförmigen Querschnitt nach außen und dort nach unten gebogen ist, so dass der obere Rand 42 der Umlenkvorrichtung 4 die Form eines geschlitzten Rohres annimmt, welches in einer horizontalen Ebene E_{xy} gekrümmt verläuft.

Der untere Rand 41 des Formteils 43 ist, ausgehend von der mittleren Verbindungsstruktur 44, zunächst radial nach innen gebogen und dann radial nach außen gebogen, wie im Querschnitt der Fig. 3 zu erkennen ist. Auch der untere Rand 41 der Umlenkvorrichtung 4 ist als gerollter Rand ausgebildet. Auch der untere Rand 41 der Umlenkvorrichtung 4 nimmt die Form eines geschlitzten Rohres an, welches in einer horizontalen Ebene E'_{xy} gekrümmt verläuft.

Sowohl bei dem als geschlitztes Rohr ausgebildeten oberen Rand 42 als auch bei dem als geschlitztes Rohr ausgebildeten unteren Rand 41 weist der jeweilige Schlitz zur Außenseite der Krümmung des Formteils 43, also der Krümmung der Umlenkvorrichtung 4. Der jeweilige geschlossene Abschnitt des als geschlitztes Rohr ausgebildeten oberen Rands 42 und des als geschlitztes Rohr ausgebildeten unteren Rands 41 weist somit zur Innenseite des gekrümmten Formteils 43, also zu dessen Gurtführungsseite, wie in Fig. 3 zu sehen ist.

Das Gurtband 32 des Sicherheitsgurts 31 ist auf seinem Weg von unten zunächst an die bezüglich der Krümmung der Umlenkvorrichtung 4 radial innere Oberfläche 41' des unteren Rands 41 herangeführt, die einen Gurtführungsabschnitt 45' der ein Gurtanlaufelement 45 bildenden Innenseite des unteren Rands 41 aufweist.

Der obere Rand 42 bildet auf seiner bezüglich der Krümmung der Umlenkvorrichtung 4 radial inneren Seite ein Gurtumlenkelement 46, das einen Gurtführungsabschnitt 46' aufweist, der von der bezüglich der Krümmung der Umlenkvorrichtung 4 radial inneren Oberfläche 42' und der oberen Oberfläche 42" des gewölbten oberen Randes 42 gebildet ist.

Wie in Fig. 3 besonders gut zu erkennen ist, stehen sowohl der Gurtführungsabschnitt 45' des Gurtanlaufelements 45 als auch der Gurtführungsabschnitt 46' des Gurtumlenkelements 46 radial nach innen (bezüglich der Krümmung der Umlenkvorrichtung 4) über die Verbindungsstruktur 44 hervor, so dass das Gurtband 32 zwischen den Gurtführungsabschnitten 45' und 46' frei verläuft, ohne an der Verbindungsstruktur 44 anzuliegen.

Sowohl der Gurtführungsabschnitt 45' des Gurtanlaufelements 45 als auch der Gurtführungsabschnitt 46' des Gurtumlenkelements 46 sind poliert und/oder mit einer reibungsreduzierenden Beschichtung versehen, so dass das Gurtband 32 des Sicherheitsgurts 31 unter minimalen Reibungsverlusten über die zugeordneten Flächen der Umlenkvorrichtung 4 gleiten kann. Die Beschichtung ist dabei so gewählt, dass weder ein eventuell vorgesehener Gurtkraftbegrenzer noch eine eventuell vorgesehene Gurtstraffereinrichtung in ihrer Funktion beeinträchtigt werden.

Anstelle von einem Gurtanlaufelement 45 können auch mehrere Gurtanlaufelemente in Laufrichtung des Gurtbandes 32 hintereinander und/oder nebeneinander angeordnet sein.

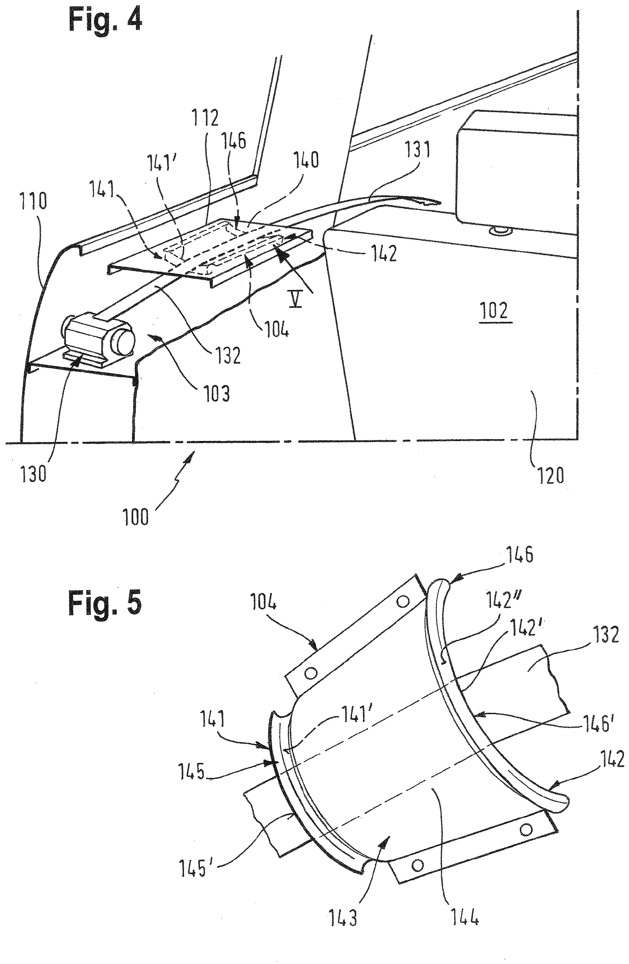

In einer in den Figuren 4 und 5 dargestellten alternativen Ausführungsform der der Umlenkvorrichtung 104, die grundsätzlich wie die erste Ausführungsform als ein Formteil 143 ausgebildet ist, erstreckt sich die Durchtrittsöffnung 140 im Wesentlichen horizontal oder in einem Winkel zur Horizontalen, wie in Fig. 4 gezeigt ist. Die Umlenkvorrichtung 104 ist dabei unter oder über beziehungsweise auf einem sich im Wesentlichen horizontal erstreckenden Abschnitt 112 der Fahrzeugstruktur 110 angebracht, so dass sich die Durchtrittsöffnung 104 zwischen dem Abschnitt 112 und der Umlenkvorrichtung 104 erstreckt.

Das Gurtband 132 des Sicherheitsgurts 131 ist auf seinem Weg von der Wickelrollenanordnung 130 von hinten zunächst an die bezüglich der Krümmung der Umlenkvorrichtung 104 radial innere Oberfläche 141' des ersten, hinteren Rands 141 herangeführt, die einen Gurtführungsabschnitt 145' der ein Gurtanlaufelement 145 bildenden Innenseite des hinteren Rands 141 aufweist.

Der zur Sitzlehne 120 der Sitzbank 102 hin weisende zweite, vordere Rand 142 bildet auf seiner bezüglich der Krümmung der Umlenkvorrichtung 104 radial inneren Seite ein Gurtumlenkelement 146, das einen Gurtführungsabschnitt 146' aufweist, der von der bezüglich der Krümmung der Umlenkvorrichtung 104 radial inneren Oberfläche 142' und der vorderen Oberfläche 142" des gewölbten vorderen Randes 142 gebildet ist.

Die innere Oberfläche 141' des vom hinteren Rand 141 der Umlenkvorrichtung 104 gebildeten Anlaufelements 145 für das Gurtband 132 und die innere Oberfläche 142' des vom vorderen Rand 142 der Umlenkvorrichtung 104 gebildeten Gurtumlenkelements 146 weisen im Wesentlichen nach oben, zum Abschnitt 112 der Fahrzeugstruktur 110 hin.

Auch bei dieser Ausführungsform stehen sowohl der Gurtführungsabschnitt 145' des Gurtanlaufelements 145 als auch der Gurtführungsabschnitt 146' des Gurtumlenkelements 146 radial nach innen (bezüglich der Krümmung der Umlenkvorrichtung 4), also hier nach oben, über die Verbindungsstruktur 144 hervor, so dass das Gurtband 132 zwischen den Gurtführungsabschnitten 145' und 146' frei verläuft, ohne an der Verbindungsstruktur 144 anzuliegen.

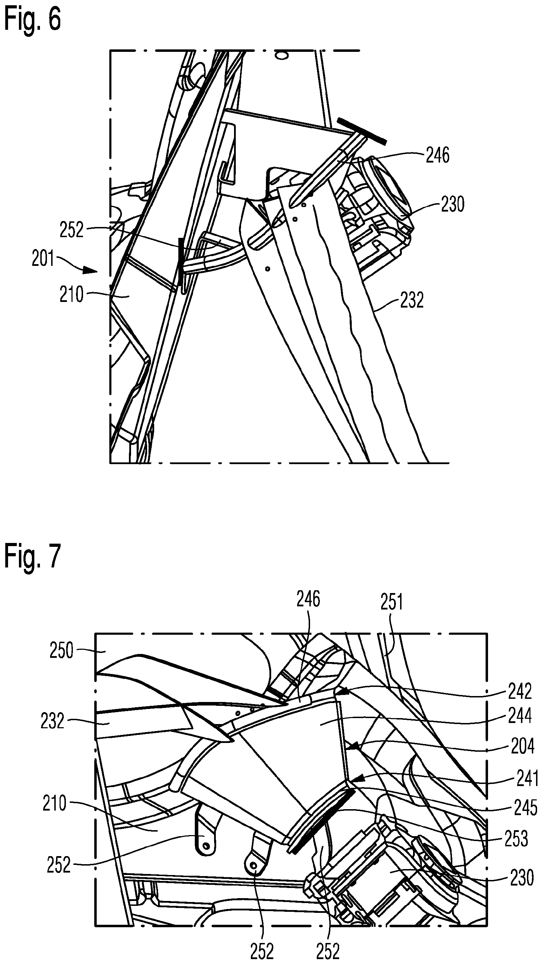

Bei der Ausführungsform der Erfindung gemäß den Figuren 6 bis 8 wird deutlich, wie mittels einer Umlenkvorrichtung 204, die an die Einbauverhältnisse eines Kraftfahrzeugs 201 angepasst ist, der Verlauf eines Gurtbands 232 in vorteilhafter Weise bestimmt werden kann. Dabei ist die Ausrichtung des Gurtbands 232 - bedingt durch die CAD-Darstellung - abweichend von der tatsächlichen Ausrichtung dargestellt, nämlich senkrecht zum tatsächlichen Verlauf.

An einer seitlichen Fahrzeugstruktur 210, mit einem hinteren Seitenfenster 250 und einer C-Säule 251, ist unterhalb der "Wurzel" der C-Säule 251 die Umlenkvorrichtung 204 angeordnet. Die Umlenkvorrichtung 204 ist ähnlich einem Ausschnitt aus der Mantelfläche eines Trichters ausgebildet und nimmt das "von unten kommende" Gurtband 232 mit einem Gurtanlaufelement 245 am unteren Rand 241 der Umlenkvorrichtung 204 auf. Das Gurtband 232 wird entlang der Umlenkvorrichtung 204 nach oben geführt zu einem Gurtumlenkelement 246 am oberen Rand 242 der Umlenkvorrichtung 204. Das Gurtumlenkelement 246 lenkt das Gurtband 232 in Richtung eines Insassen auf einer nicht dargestellten Rücksitzbank des Kraftfahrzeugs 201 um.

Die Umlenkvorrichtung 204 ist als einstückiges Formteil ausgebildet und wird beispielsweise von einem tiefgezogenen Blechbauteil gebildet. Zwischen dem Gurtanlaufelement 245 und dem Gurtumlenkelement 246 ist eine glattflächige, ungleichmäßig gewölbte Verbindungsstruktur 244 vorgesehen, die nicht in Kontakt mit dem Gurtband 232 tritt. Die Umlenkvorrichtung 204 ist über Befestigungslaschen 252 an der Fahrzeugstruktur 210 befestigt.

Erfindungsgemäß hat das Gurtanlaufelement 245 eine Breite, die nur geringfügig größer ist als die Breite des Gurtbands 232, um einen möglichst präzisen Einlauf des Gurtbands 232 in die Umlenkvorrichtung 204 zu gewährleisten. Dazu ist die Umlenkvorrichtung 204 mit ihrem unteren Rand 241 unmittelbar benachbart zum Gurtauslass an der Wickelrollenanordnung 230 angeordnet und entsprechend dem Austrittswinkel des Gurtbands 232 aus der Wickelrollenanordnung 230 ausgerichtet.

Ebenso erfindungsgemäß hat das Gurtumlenkelement 246 eine Breite, die deutlich größer ist als die Breite des Gurtbands 232, um einen möglichst großen Winkelbereich für den Austritt des Gurtbands 232 aus der Umlenkvorrichtung 204 zu ermöglichen, mit dem Ziel, das Gurtband 232 optimal an den Insassen heranzuführen. Damit kann der Insasse, soweit nicht schon das Gurtband 232 aufgrund der Körpergroße und der Statur des Insassen selbsttätig einen komfortablen Verlauf des Gurtbands 232 einnimmt, den Verlauf des Gurtbands 232 im Sinn eines möglichst komfortablen Gurtbandverlaufs korrigieren.

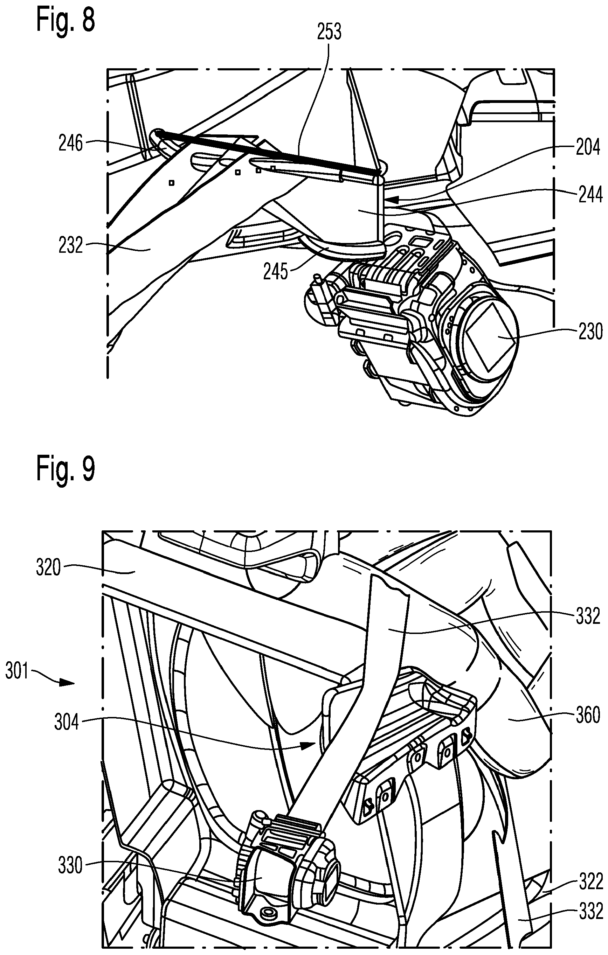

Wie insbesondere aus den Figuren 6 und 8 hervorgeht, weist das Gurtumlenkelement 246 in seiner Breitenerstreckung einen ungleichmäßig gekrümmten bogenförmigen Verlauf auf. Hierdurch wird eine aus ergonomischer Sicht optimierte Position des Gurtbands 232 beim Austritt aus der Umlenkvorrichtung 204 erreicht, mit einem für den Insassen komfortablen Verlauf des Gurtbands 232 im Schulter- und Thoraxbereich. Dieser Gurtbandverlauf stellt sich, wie oben beschrieben, selbsttätig ein, kann jedoch vom Insassen durch Verschieben des Gurtbands 232 entlang der Gurtumlenkelements 246 individuell verändert werden, beispielsweise, wenn der Insasse eine von der aufrechten Lage abweichende Sitzposition einnimmt.

Die Mittelachsen 253 von Gurtanlaufelement 245 und Gurtumlenkelement 246 sind windschief zueinander angeordnet.

Auch bei der Ausführungsform der Erfindung gemäß den Figuren 9 bis 12 wird deutlich, wie mittels einer Umlenkvorrichtung 304, die an die Gegebenheiten in einem Kraftfahrzeugs 301 angepasst ist, der Verlauf eines Gurtbands 332 in vorteilhafter Weise bestimmt werden kann.

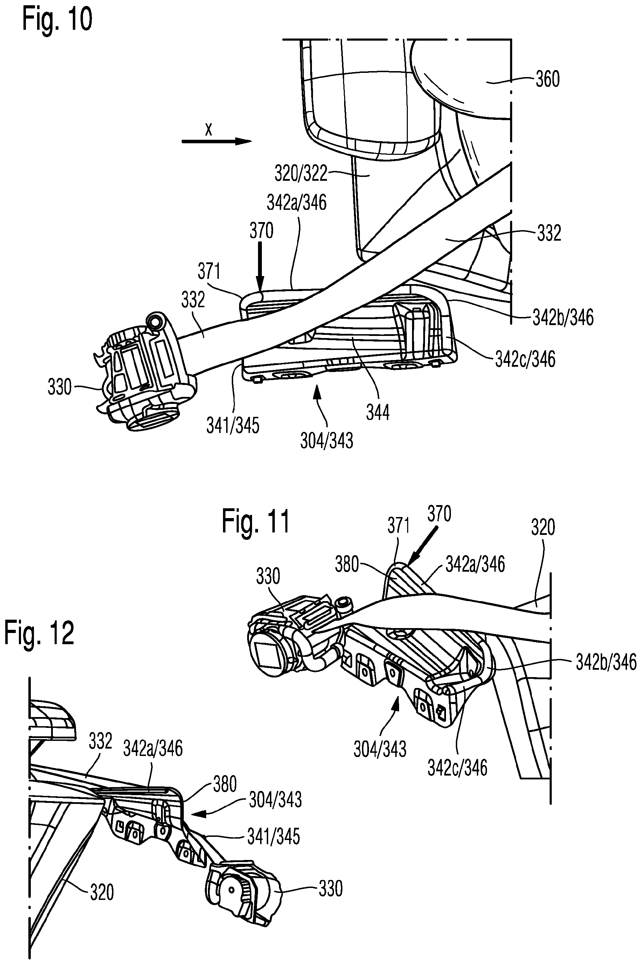

Aus einer Wickelrollenanordnung 330 hinter einem Rücksitz 322 wird das Gurtband 332 über die Umlenkvorrichtung 304 einem Passagier 360 zugeführt. Die Umlenkvorrichtung 304 ist als Formteil 343 beispielsweise aus Stahlblech gebildet. Am hinteren Rand 341 einer Verbindungsstruktur 344 der Umlenkvorrichtung 304, die beispielsweise als um die Laufrichtung des Gurtbandes 332 gewölbtes Blech ausgebildet ist, ist ein Gurtanlaufelement 345 ausgebildet. Ein Gurtumlenkelement 346 ist durchgehend vom oberen Rand 342a der Umlenkvorrichtung 304 bis zum vorderen Rand 342c ausgebildet, wobei die beiden Abschnitte 342a und 342c über einen Radius 342b ineinander übergehen. Wie insbesondere aus Figur 10 hervorgeht, ist das Gurtumlenkelement 346 in der Draufsicht L-förmig.

Das Gurtanlaufelement 345 wird an seinem fahrzeuginnenseitigen Rand durch eine in Einbaulage im Kraftfahrzeug 301 etwa senkrecht verlaufende Wand 380 begrenzt. Alternativ kann die seitliche Begrenzung des Gurtanlaufelements 345 auch durch ein nicht dargestelltes Zusatzbauteil oder Verkleidungsbauteil erfolgen. Ebenso kann am fahrzeugaußenseitigen Rand ein Zusatzbauteil oder Verkleidungsbauteil vorgesehen sein.

Das Gurtumlenkelement 346 "beginnt" endseitig am Übergang eines hinteren Radius 371 in den oberen Rand 342a. Der Pfeil 370 markiert die hinterste Position, die der fahrzeuginnenseitige Rand des Gurtbands 332 einnehmen kann.

Ist das Gurtband 332 in seiner abgelegten Position, also bei einem unbesetzten Rücksitz 322, liegt es auf dem vorderen Rand 342c auf.

In den Figuren 9 bis 12 ist das Gurtband 332 in einer etwa mittigen Position dargestellt. Daneben kann das Gurtband 332 alle Lagen zwischen der hintersten Position 370 und der Ablageposition (vorderste Position) am vorderen Rand 342c einnehmen.

Die Ausgestaltung des Gurtumlenkelements 346 mit einem vergleichsweise langgestreckten, im Wesentlichen geradlinig verlaufenden oberen Rand 342a ist darauf abgestimmt, dass der Rücksitz 322 parallel zur Längsrichtung X (Fahrtrichtung) des Kraftfahrzeugs 301 verstellbar ist. Damit kann der Verlauf des Gurtbands 332 nicht nur auf die Körpergröße, Statur und Körperhaltung eines Passagiers 360, sondern auch auf verschiedene Längspositionen des Sitzes 322 abgestimmt werden.

Selbstverständlich gilt dies sinngemäß auch für eine in ihrer Neigung verstellbare Rückenlehne 320 des Sitzes 322.

Die Erfindung ist nicht auf die obigen Ausführungsbeispiele beschränkt, die lediglich der allgemeinen Erläuterung des Kerngedankens der Erfindung dient.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Kraftfahrzeug
- 2: Sitzbank
- 3: Sicherheitsgurtanordnung
- 4: Umlenkvorrichtung
- 10: Fahrzeugstruktur
- 20: Sitzlehne
- 22: äußerer Sitz
- 30: Wickelrollenanordnung
- 31: Sicherheitsgurt
- 32: Gurtband
- 40: Durchtrittsöffnung
- 41: erster, unterer Rand
- 41': innere Oberfläche
- 42: zweiter, oberer Rand
- 42': innere Oberfläche
- 42": obere Oberfläche
- 43: Formteil
- 44: mittlere Verbindungsstruktur
- 45: Gurtanlaufelement
- 45': unterer Gurtführungsabschnitt
- 46: Gurtumlenkelement
- 46': oberer Gurtführungsabschnitt
- 102: Sitzbank
- 103: Sicherheitsgurtanordnung
- 104: Umlenkvorrichtung
- 110: Fahrzeugstruktur
- 112: Abschnitt der Fahrzeugstruktur 110
- 120: Sitzlehne
- 130: Wickelrollenanordnung
- 131: Sicherheitsgurt
- 132: Gurtband
- 140: Durchtrittsöffnung
- 141: erster, hinterer Rand
- 141': radial innere Oberfläche
- 142: zweiter, vorderer Rand
- 142': radial innere Oberfläche
- 142": vordere Oberfläche
- 143: Formteil
- 144: Verbindungsstruktur
- 145: Gurtanlaufelement
- 145': Gurtführungsabschnitt
- 146: Gurtumlenkelement
- 146': Gurtführungsabschnitt
- 201: Kraftfahrzeug
- 204: Umlenkvorrichtung
- 210: Fahrzeugstruktur
- 230: Wickelrollenanordnung
- 232: Gurtband
- 241: unterer Rand
- 242: oberer Rand
- 244: Verbindungsstruktur
- 245: Gurtanlaufelement
- 246: Gurtumlenkelement
- 250: Seitenfenster
- 251: C-Säule
- 252: Befestigungslasche
- 253: Mittelachse
- 301: Kraftfahrzeug
- 304: Umlenkvorrichtung
- 330: Wickelrollenanordnung
- 332: Gurtband
- 341: hinterer Rand
- 342a: oberer Rand
- 342b: Radius
- 342c: vorderer Rand
- 343: Formteil
- 344: Verbindungsstruktur
- 345: Gurtanlaufelement
- 346: Gurtumlenkelement
- 360: Passagier
- 370: hinterste Position
- 371: hinterer Radius
- 380: Wand
- X: Längsrichtung

## Patentansprüche

1. Umlenkvorrichtung für einen Sicherheitsgurt in einem Kraftfahrzeug, mit einem Gurtumlenkelement (46; 146; 246; 346), das ausgebildet ist, um einen aus einer ersten Richtung herangeführten Sicherheitsgurt (31; 131) in eine zweite Richtung umzulenken, wobei
- dass das Gurtumlenkelement (46; 146; 246; 346) an einem Formteil (43; 143; 343) ausgebildet ist,
- dass am Formteil (43; 143; 343) zumindest ein Gurtanlaufelement (45; 145; 245; 345) vorgesehen ist, das den an das Formteil (43; 143; 343) herangeführten Sicherheitsgurt (31; 131) zum Gurtumlenkelement (46; 146; 246; 346) hin lenkt,
- dass die Breite des Gurtanlaufelements (45; 145; 245; 345) der 1-fachen bis 1,5-fachen Breite des Gurtbands (32; 132; 232; 332) des Sicherheitsgurts (31; 131) entspricht,
- dass die Breite des Gurtumlenkelements (46; 146; 246; 346) der 2-fachen bis 5-fachen Breite des Gurtbands (32; 132; 232; 332) entspricht,
- das Formteil (43; 143; 343) aus einem Metallblech gebildet ist,
- das Formteil (43; 143; 343) ein Tiefziehteil ist,
- das Gurtanlaufelement (45; 145; 245; 345) an einem ersten Rand (41; 141; 241) des Formteils (43; 143; 343) und
- das Gurtumlenkelement (46; 146; 246; 346) an einem zweiten Rand (42; 142; 242; 342a; 342b; 342c) des Formteils (43; 143; 343) ausgebildet ist.

2. Umlenkvorrichtung nach Anspruch 1,
**dadurch gekennzeichnet,**
**dass** der erste Rand (41; 141; 241) des Formteils (43; 143; 343) gerollt ist.

3. Umlenkvorrichtung nach Anspruch 1,
**dadurch gekennzeichnet,**
**dass** der zweite Rand (42; 142; 242; 342a; 342b; 342c) des Formteils (43; 143; 343) gerollt ist.

4. Umlenkvorrichtung nach Anspruch 2 und 3,
**dadurch gekennzeichnet,**
- **dass** sich zwischen dem ersten gerollten Rand (41; 141; 241) und dem zweiten gerollten Rand (42; 142; 242; 342a; 342b; 342c) eine mittlere Verbindungsstruktur (44; 144; 244; 344), vorzugsweise eine Verbindungsfläche, des Formteils (43; 143; 343) erstreckt und
- **dass** zumindest ein Gurtführungsabschnitt (46'; 146') des Gurtumlenkelements (46; 146; 246; 346) und zumindest ein Gurtführungsabschnitt (45'; 145') des Gurtanlaufelements (45; 145; 245; 345) über die Verbindungsstruktur (44; 144; 244; 344) hervorstehen.

5. Umlenkvorrichtung nach Anspruch 4,
**dadurch gekennzeichnet,**
**dass** das Gurtumlenkelement (46; 146; 246) bogenförmig gekrümmt ist.

6. Umlenkvorrichtung nach einem der Ansprüche 1 bis 4,
**dadurch gekennzeichnet,**
**dass** das Gurtumlenkelement (346) L-förmig ausgebildet ist.

7. Umlenkvorrichtung nach einem der vorhergehenden Ansprüche,
**dadurch gekennzeichnet,**
**dass** die Mittelachsen (253) von Gurtanlaufelement (245) und Gurtumlenkelement (246) windschief zueinander verlaufen.

8. Kraftfahrzeug mit zumindest einer Sicherheitsgurtanordnung (3; 103), die eine Umlenkvorrichtung (4; 104; 204; 304) gemäß einem der vorhergehenden Ansprüche aufweist.

## Claims

1. Deflecting device for a safety belt in a motor vehicle, having a belt deflecting element (46; 146; 246; 346), which is configured to deflect a safety belt (31; 131) introduced from a first direction into a second direction, wherein
- the belt deflecting element (46; 146; 246; 346) is formed on a moulded part (43; 143; 343),
- at least one belt run-on element (45; 145; 245; 345) is provided on the moulded part (43; 143; 343), said belt run-on element (45; 145; 245; 345) directing the safety belt (31; 131) introduced onto the moulded part (43; 143; 343) towards the belt deflecting element (46; 146; 246; 346) ,
- the width of the belt run-on element (45; 145; 245; 345) corresponds to 1 to 1.5 times the width of the belt webbing (32; 132; 232; 332) of the safety belt (31; 131),
- the width of the belt deflecting element (46; 146; 246; 346) corresponds to 2 to 5 times the width of the belt webbing (32; 132; 232; 332),
- the moulded part (43; 143; 343) is formed from a metal sheet,
- the moulded part (43; 143; 343) is a deep-drawn part,
- the belt run-on element (45; 145; 245; 345) is formed at a first edge (41; 141; 241) of the moulded part (43; 143; 343), and
- the belt deflecting element (46; 146; 246; 346) is formed at a second edge (42; 142; 242; 342a; 342b; 342c) of the moulded part (43; 143; 343).

2. Deflecting device according to Claim 1,
**characterized**
**in that** the first edge (41; 141; 241) of the moulded part (43; 143; 343) is rolled.

3. Deflecting device according to Claim 1,
**characterized**
**in that** the second edge (42; 142; 242; 342a; 342b; 342c) of the moulded part (43; 143; 343) is rolled.

4. Deflecting device according to Claims 2 and 3,
**characterized**
- **in that** a central connecting structure (44; 144; 244; 344), preferably a connecting face, of the moulded part (43; 143; 343) extends between the first rolled edge (41; 141; 241) and the second rolled edge (42; 142; 242; 342a; 342b; 342c), and
- **in that** at least one belt guiding portion (46'; 146') of the belt deflecting element (46; 146; 246; 346) and at least one belt guiding portion (45'; 145') of the belt run-on element (45; 145; 245; 345) protrude beyond the connecting structure (44; 144; 244; 344).

5. Deflecting device according to Claim 4,
**characterized**
**in that** the belt deflecting element (46; 146; 246) is curved in an arcuate manner.

6. Deflecting device according to one of Claims 1 to 4,
**characterized**
**in that** the belt deflecting element (346) is formed in an L-shaped manner.

7. Deflecting device according to one of the preceding claims,
**characterized**
**in that** the central axes (253) of the belt run-on element (245) and belt deflecting element (246) extend in a skew manner with respect to one another.

8. Motor vehicle having at least one safety belt arrangement (3; 103) that has a deflecting device (4; 104; 204; 304) according to one of the preceding claims.

## Revendications

1. Dispositif de renvoi pour une ceinture de sécurité dans un véhicule automobile, comportant un élément de renvoi de ceinture (46; 146; 246; 346) qui est réalisé pour dévier une ceinture de sécurité (31; 131) introduite à partir d'une première direction dans une deuxième direction, dans lequel
- l'élément de renvoi de ceinture (46; 146; 246; 346) est réalisé sur une pièce moulée (43; 143; 343),
- au moins un élément de contact de ceinture (45; 145; 245; 345) est prévu sur la pièce moulée (43; 143; 343), lequel élément de contact de ceinture dirige la ceinture de sécurité (31; 131) guidée devant la pièce moulée (43; 143; 343) vers l'élément de renvoi de ceinture (46; 146; 246; 346),
- la largeur de l'élément de contact de ceinture (45; 145; 245; 345) correspond à 1 fois à 1,5 fois la largeur de la sangle (32; 132; 232; 332) de la ceinture de sécurité (31; 131),
- la largeur de l'élément de renvoi de ceinture (46; 146; 246; 346) correspond à 2 fois à 5 fois la largeur de la sangle (32; 132; 232; 332),
- la pièce moulée (43; 143; 343) est formée à partir d'une tôle métallique,
- la pièce moulée (43; 143; 343) est une pièce obtenue par emboutissage profond,
- l'élément de contact de ceinture (45; 145; 245; 345) est réalisé sur un premier bord (41; 141; 241) de la pièce moulée (43; 143; 343) et
- l'élément de renvoi de ceinture (46; 146; 246; 346) est réalisé sur un deuxième bord (42; 142; 242; 342a; 342b; 342c) de la pièce moulée (43; 143; 343).

2. Dispositif de renvoi selon la revendication 1,
**caractérisé en ce que**
le premier bord (41; 141; 241) de la pièce moulée (43; 143; 343) est roulé.

3. Dispositif de renvoi selon la revendication 1,
**caractérisé en ce que**
le deuxième bord (42; 142; 242; 342a; 342b; 342c) de la pièce moulée (43; 143; 343) est roulé.

4. Dispositif de renvoi selon les revendications 2 et 3,
**caractérisé**
- **en ce qu'**une structure de liaison centrale (44; 144; 244; 344), de préférence une surface de liaison, de la pièce moulée (43; 143; 343) s'étend entre le premier bord roulé (41; 141; 241) et le deuxième bord roulé (42; 142; 242; 342a; 342b; 342c) et
- **en ce qu'**au moins une partie de guidage de ceinture (46'; 146') de l'élément de renvoi de ceinture (46; 146; 246; 346) et au moins une partie de guidage de ceinture (45'; 145') de l'élément de contact de ceinture (45; 145; 245; 345) dépassent de la structure de liaison (44; 144; 244; 344).

5. Dispositif de renvoi selon la revendication 4,
**caractérisé en ce que**
l'élément de renvoi de ceinture (46; 146; 246) est courbé en forme d'arc.

6. Dispositif de renvoi selon l'une des revendications 1 à 4,
**caractérisé en ce que**
l'élément de renvoi de ceinture (346) est réalisé en forme de L.

7. Dispositif de renvoi selon l'une des revendications précédentes,
**caractérisé en ce que**
les axes centraux (253) de l'élément de contact de ceinture (245) et de l'élément de renvoi de ceinture (246) s'étendent de manière oblique l'un par rapport à l'autre.

8. Véhicule automobile comportant au moins un ensemble de ceinture de sécurité (3; 103) qui comprend un dispositif de renvoi (4; 104; 204; 304) selon l'une des revendications précédentes.
